# EUROPÄISCHE PATENTSCHRIFT

(11) **EP 0 989 011 B1**
(45) Veröffentlichungstag und Bekanntmachung des Hinweises auf die Patenterteilung: **06.04.2005**
(21) Anmeldenummer: 99116482.3
(22) Anmeldetag: 23.08.1999
(51) Int. Cl.: B60K 20/02, F16H 59/04, G05G 5/06

(54) **Widerlager für eine Feder**
Abutment for a spring
Butée pour un ressort

(30) Priorität: 26.09.1998 DE 19844278
(43) Veröffentlichungstag der Anmeldung: 29.03.2000
(73) Patentinhaber: Dr.Ing. h.c.F. Porsche Aktiengesellschaft, 70435 Stuttgart (DE)
(72) Erfinder: Sander, Edmund, 71229 Leonberg (DE); Hartnigk, Sven, 71686 Remseck/N. (DE)

(56) Entgegenhaltungen:
- DE-A- 4 116 186
- US-A- 5 220 984
- US-A- 5 566 582

## Beschreibung

Die Erfindung betrifft ein Widerlager für eine Feder, wie sie zum Abstützen eines Betätigungselementes für eine Sperreinrichtung eines Wählhebels verwendet wird.

Wie beispielsweise in der DE 39 27 922 A1 offenbart, sind bekannte Widerlager am Wählhebel fest angeformt.

Gegenüber diesem Stand der Technik ist es Aufgabe der Erfindung, ein Widerlager für eine Feder zu schaffen, das hinsichtlich seiner Montage vereinfacht ist.

Diese Aufgabe wird erfindungsgemäß mit den Merkmalen des Patentanspruches 1 gelöst. Hierzu wird vorgeschlagen, das Widerlager als Platte auszubilden, an der Vorsprünge mit endseits angeordneten Rastnasen vorgesehen sind. Zur Aufnahme der Platte weist ein Unterteil des Wählhebels im wesentlichen parallele Wandungen auf, in denen Öffnungen zur Aufnahme der Rastnasen vorgesehen sind. Die Montage eines solchen Widerlagers ist auch zu einem späten Montagezeitpunkt noch möglich, so daß bei den vorhergehenden Montageschritten des Wählhebels die Feder nicht montiert sein muß bzw. nicht unter Vorspannung steht, und somit der Montageablauf erleichtert ist. Dadurch, daß als Befestigungsmittel Rastnasen vorgesehen sind, muß auch bei der Montage des Widerlagers nicht die Vorspannkraft der Feder während des Befestigungsvorganges abgestützt werden, sondern das Widerlager kann vielmehr in einem einzigen Montageschritt durch Einschieben in die parallelen Wandungen montiert werden.

Vorteilhafte Weiterbildungen der Erfindung sind in den Unteransprüchen beschrieben.

So wird vorgeschlagen, an der Oberseite der Platte eine Vorrichtung zur Aufnahme eines Fußbereiches der Feder vorzusehen. Durch diese Maßnahme ist die Feder mit dem Widerlager verbunden, und bei einer Montage des Widerlagers muß die Feder nicht gesondert gehalten werden, so daß die Montage weiter erleichtert ist.

Weiterhin wird vorgeschlagen, seitlich an der ersten Platte eine zweite Platte anzuformen und seitlich an den Wandungen im wesentlichen parallele Stirnflächen vorzusehen, auf denen die zweite Platte plan aufliegend gleiten kann. Die zweite Platte ist hierbei so gestaltet, daß sie in der Montageposition der Erstplatte im wesentlichen plan auf den Stirnflächen aufliegt. Damit ist die Montage des Widerlagers weiter vereinfacht, da zur korrekten Ausrichtung der Rastnasen in Bezug auf die wandseitigen Öffnungen nun nur noch die zweite Platte auf die Stirnflächen plan aufgelegt und dann entgegen der Kraft der Feder soweit bewegt werden muß, bis die Rastnasen in den wandseitigen Öffnungen verrasten. Der Montagevorgang kann weiter erleichtert werden, indem an der Oberseite der zweiten Platte eine Handhabe, beispielsweise eine Mulde für den Daumen, vorgesehen ist.

Schließlich können korrespondierend zur ersten Platte Anschläge an den Wandungen oder korrespondierend zur zweiten Platte Anschläge an den Stirnflächen vorgesehen sein, die eine Bewegung des Widerlagers gegen die Kraft der Feder über die Montageposition hinaus verhindern und somit die Montagesicherheit erhöhen.

Die Erfindung ist nachstehend anhand des in den Figuren dargestellten Ausführungsbeispieles näher erläutert.

Es zeigen
- Fig. 1: einen Schnitt durch einen Wählhebel mit einem montierten Widerlager,
- Fig. 2: eine Rückansicht des Wählhebels nach Fig. 1,
- Fig. 3: eine Schrägansicht des Wählhebels nach Fig. 1 und
- Fig. 4: eine Einzeldarstellung des Widerlagers.

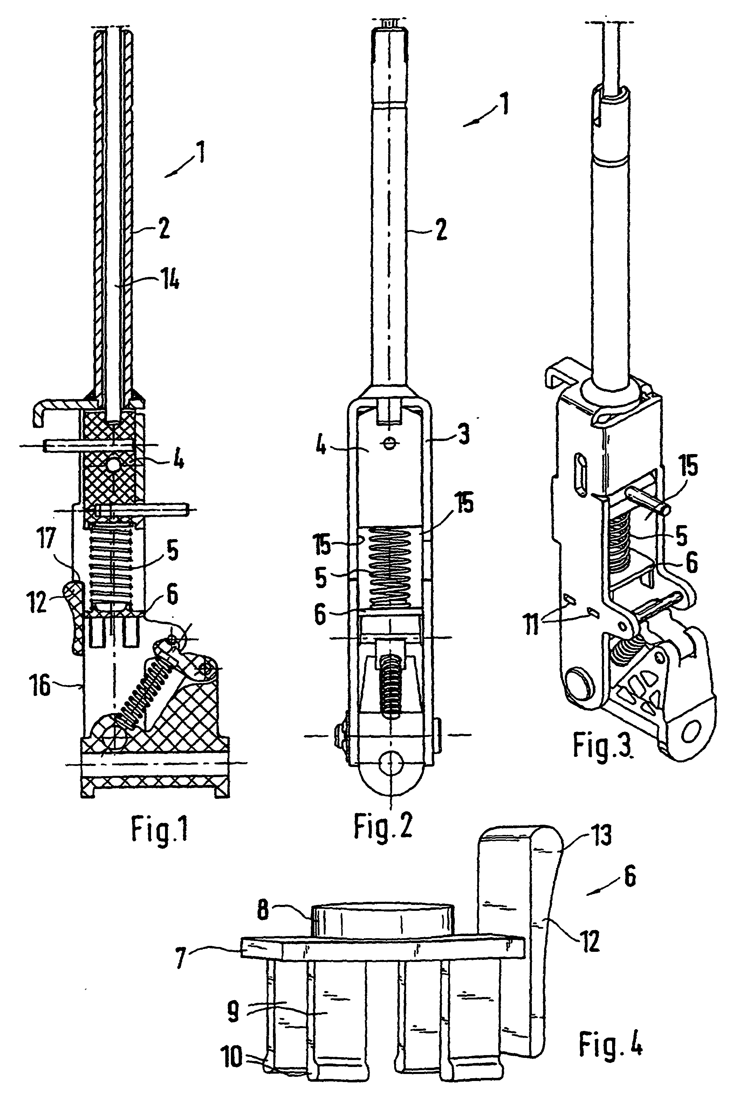

Ein in Fig. 1 gezeigter Wählhebel 1 besteht aus einem rohrförmigen Oberteil 2 sowie einem gegabelten Unterteil 3. Innerhalb des Oberteiles 2 ist eine Betätigungsstange 14 geführt, die mit einem Schieber 4 verbunden ist. Um die Betätigungsstange 14 und den Schieber 4 in der dargestellten Ruhelage zu halten, ist unterhalb des Schiebers 4 eine vorgespannte Feder 5 angeordnet. Die Feder 5 stützt sich an einem tischförmigen Widerlager 6 ab, das an im wesentlichen parallelen Wandungen 15 des Unterteiles 3 gehalten ist.

Wie in Fig. 4 zu erkennen, besteht das tischförmige Widerlager 6 aus einer ersten Platte 7, an deren Oberseite ein Ring 8 zur Aufnahme eines Fußbereiches der Feder 5 angeformt ist. Hierzu ist der Außendurchmesser des Ringes 8 ein wenig größer als der Innendurchmesser der Feder 5 gewählt, so daß die Feder 5 auf dem Ring 8 sicher gehalten ist. An der Unterseite der ersten Platte 7 sind als Spreizarm ausgebildete Vorsprünge 9 angeordnet, die endseits mit Rastnasen 10 versehen sind. Die Größe der ersten Platte 7 ist so gewählt, daß sie bündig innerhalb des gabelförmigen Unterteiles 3 geführt ist und die Spreizarme 9 an seitlichen Wandungen 15 des Unterteiles 3 anliegen. In der in Fig. 1 dargestellten Montageposition greifen die Rastnasen 10 in Ausnehmungen 11 der seitlichen Wandungen 15 ein und halten so das Widerlager 6 gegen die Kraft der Feder in Position.

Bei der Montage des Widerlagers 6 muß gleichzeitig die Vorspannkraft der Feder 5 aufgebracht werden. Um diese Arbeit zu erleichtern, ist am Widerlager 6 seitlich als Einführhilfe eine zweite Platte 12 angeordnet. Die zweite Platte 12 gleitet bei der Montage des Widerlagers 6 auf Stirnseiten 16 der seitlichen Wandungen 15 und ist am Widerlager 6 so angeordnet, daß bei planer Anlage der zweiten Platte 12 die Rastnasen 10 in die Ausnehmungen 11 treffen. Endseits der zweiten Platte 12 ist als Handhabe eine Verdickung 13 vorgesehen, um so das Aufbringen der Vorspannkraft für die Feder 5 zu erleichtern. Anstelle der Verdickung kann in die zweite Platte 12 auch eine Vertiefung eingearbeitet sein. Schließlich sind an den Stirnflächen 16 Vorsprünge 17 vorgesehen, die ein Verschieben der zweiten Platte 12 und damit des Widerlagers 6 über die Montageposition hinaus verhindert. Solche Anschläge können auch an den Wandungen 15 vorgesehen sein und auf die erste Platte 7 wirken.

## Patentansprüche

1. Widerlager (6) für eine Feder (5) zum Abstützen eines Betätigungselementes (4) für eine Sperreinrichtung eines Wählhebels (1), **dadurch gekennzeichnet, daß** das Widerlager als Platte (7) ausgeführt ist, an deren Unterseite seitlich Vorsprünge (9) angeformt sind, die endseits mit Rastnasen (10) versehen sind, wobei ein Unterteil (3) des Wählhebels im wesentlichen parallele Wandungen (15) aufweist, in denen Öffnungen (11) zur Aufnahme der Rastnasen vorgesehen sind.

2. Widerlager nach Anspruch 1, **dadurch gekennzeichnet, daß** an der Oberseite der Platte (7) eine Vorrichtung (8) zur Aufnahme eines Fußbereiches der Feder (5) vorgesehen ist.

3. Widerlager nach Anspruch 1 oder 2, **dadurch gekennzeichnet, daß** seitlich an der ersten Platte (7) eine zweite Platte (12) angeformt ist und die Wandungen (15) im wesentlichen parallele Stirnflächen (16) aufweisen, auf denen die zweite Platte gleiten kann, wobei die zweite Platte so gestaltet ist, daß sie in der Montageposition der ersten Platte, in der die Rastnasen (10) in die wandseitigen Öffnungen (11) eingreifen, auf den Stirnflächen plan aufliegt.

4. Widerlager nach Anspruch 3, **dadurch gekennzeichnet, daß** an der Oberseite der zweiten Platte (12) eine Handhabe (13) vorgesehen ist.

5. Widerlager nach einem der Ansprüche 1 bis 4, **dadurch gekennzeichnet, daß** an den Wandungen (15) ein oder mehrere Anschläge für die erste Platte (7) vorgesehen sind.

6. Widerlager nach einem der Ansprüche 1 bis 4, **dadurch gekennzeichnet, daß** an den Stirnflächen (16) ein oder mehrere Anschläge (17) für die zweite Platte (12) vorgesehen sind.

## Claims

1. An abutment (6) for a spring (5) in order to support an actuating element (4) for a locking device of a selector lever (1), **characterized in that** the abutment is designed in the form of a plate (7), on the underside of which projections (9) are integrally moulded at the sides, the projections (9) being provided at the ends with detents (10), wherein a lower part (3) of the selector lever has walls (15) which are substantially parallel and in which openings (11) are provided in order to receive the detents.

2. An abutment according to Claim 1, **characterized in that** a device (8) for receiving a foot region of the spring (5) is provided on the top side of the plate (7).

3. An abutment according to Claim 1 or 2, **characterized in that** a second plate (12) is integrally moulded at the side of the first plate (7) and the walls (15) have end faces (16) which are substantially parallel and on which the second plate can slide, wherein the second plate is designed in such a way that in the assembly position of the first plate, in which the detents (10) engage in the openings (11) in the wall, the second plate rests flat on the end faces.

4. An abutment according to Claim 3, **characterized in that** a handle (13) is provided on the top side of the second plate (12).

5. An abutment according to one of Claims 1 to 4, **characterized in that** one or more stops for the first plate (7) are provided on the walls (15).

6. An abutment according to one of Claims 1 to 4, **characterized in that** one or more stops (17) for the second plate (12) are provided on the end faces (16).

## Revendications

1. Contre-butée (6) pour un ressort (5) destinée à soutenir un élément d'actionnement (4) d'un dispositif de blocage d'un levier de sélection (1), **caractérisée en ce que** la contre-butée est réalisée comme plaque (7) sur la face inférieure de laquelle sont formées latéralement des saillies (9) qui sont pourvues à leur extrémité d'ergots d'encliquetage (10), une partie inférieure (3) du levier de sélection présentant des parois (15) sensiblement parallèles dans lesquelles sont prévues des ouvertures (11) destinées à recevoir les ergots d'encliquetage.

2. Contre-butée selon la revendication 1, **caractérisée en ce que** sur la face supérieure de la plaque (7) est prévu un dispositif (8) destiné à recevoir une zone de pied du ressort (5).

3. Contre-butée selon la revendication 1 ou 2, **caractérisée en ce que** sur le côté de la première plaque (7) est formée une deuxième plaque (12) et les parois (15) présentent des surfaces frontales (16) sensiblement parallèles sur lesquelles peut glisser la deuxième plaque, la deuxième plaque étant telle qu'en position de montage de la première plaque, dans laquelle les ergots d'encliquetage (10) s'engagent dans les ouvertures (11) côté parois, elle repose à plat sur les surfaces frontales.

4. Contre-butée selon la revendication 3, **caractérisée en ce que** sur la face supérieure de la deuxième plaque (12) est prévue une poignée (13).

5. Contre-butée selon l'une des revendications 1 à 4, **caractérisée en ce que** sur les parois ( 15) sont prévues une ou plusieurs butées pour la première plaque (7).

6. Contre-butée selon l'une des revendications 1 à 4, **caractérisée en ce que** sur les surfaces frontales (16) sont prévues une ou plusieurs butées (17) pour la deuxième plaque (12).
